# EUROPEAN PATENT SPECIFICATION

(11) **EP 1 128 989 B1**
(45) Date of publication and mention of the grant of the patent: **20.11.2002**
(21) Application number: 99944278.3
(22) Date of filing: 20.09.1999
(51) Int. Cl.: B60R 13/10

(54) **A LICENCE PLATE AND A METHOD OF MANUFACTURING A LICENCE PLATE**
FAHRZEUGKENNZEICHEN UND HERSTELLUNGSVERFAHREN
PLAQUE D'IMMATRICULATION ET PROCEDE DE FABRICATION ASSOCIE

(30) Priority: 24.09.1998 DK 120198
(43) Date of publication of application: 05.09.2001
(73) Proprietor: Stig Ravn A/S, 4653 Karise (DK)
(72) Inventor: RAVN, Ole, Stig, DK-2960 Rungsted Kyst (DK)
(74) Representative: Sundien, Thomas
(86) International application number: DK9900498
(87) International publication number: WO00017015

(56) References cited:
- EP-A1- 0 613 804
- CH-A5- 670 223
- DE-C1- 4 411 503

## Description

The invention relates to a licence or registration plate for vehicles, comprising a sealing profile, a plastics carrier plate and a laminate which is adhesively attached to said carrier plate, said laminate comprising at least one adhesive layer facing towards the carrier plate and a layer carrying identification symbols.

EP patent No 0 613 804 discloses a registration sign having the features of the preamble of claim 1 and which includes a film portion provided with registration symbols formed by means of toner material that has been applied to a surface of the film portion by means of an electronic printer, said film portion being arranged between a bottom plate and a front plate of such transparent material that the registration symbols on the film become visible therethrough, and wherein a frame surrounds this package comprising the bottom plate, the front plate and the film portion arranged therebetween, and wherein said frame is an injection-moulded, U-shaped plastics frame which sealingly encloses the sign package on all sides thereof. It will appear from the disclosure that the frame is injection moulded directly around the edges of the package in order to hereby form a hot-welding with the backside of the bottom plate as well as the front side of the front plate, and the edges thereof, by the two legs of the U engaging around the front and back of the package.

Such package construction is a heavy as well as expensive solution and it has also been found that the injection moulding of the U-shaped frame directly around the laminate does not yield a sufficiently tight sealing of the individual laminate layers against penetrating dampness which may be due to the fact that a joining by welding of the injected plastics material to the carrier face and the laminate is not secured in the areas that are situated far from an inlet due to the fact that the foremost liquid front of the plastics melt will be cooled on its way away from the inlet. To some extent this problem can be solved by providing the tool for injection moulding with a plurality of inlets which greatly increases the costs involved and leads to massive waste of material. In particular cases there may also be a need for flexibility to enable initial, centralised manufacture of the individual components of the licence plate and subsequent decentralised printing of identification symbols onto the laminate, and sealing of the laminate to the carrier plate. This will not be possible or it will highly impractical with the technique taught in the EP citation in view of the fact that the final finishing of the licence plate involves use of an injection moulding apparatus which is unsuitable for the production of individual pieces or quite small series.

It is the object of the invention to provide a light and durable licence plate which is not cost-intensive and is proof against penetrating dampness and which enables centralised or decentralised finishing and which provides the optimum safety against attempts of fraud.

This is obtained with a licence plate of the kind described in the introductory part in that the laminate covers the carrier plate until it reaches a predetermined uncovered rim portion thereof, and wherein the sealing profile has two separate sealing areas, viz a first sealing area which is unbreakably fastened to the carrier plate at the annular rim portion which is not covered by the laminate, and a second sealing area which is attached by a sealing connection to the outside of an annular rim area of the laminate.

With a licence plate formed of a carrier plate and a laminate adhesively attached thereto a light and economically advantageous construction is obtained, and by use of a separate sealing profile which is, in well-defined, separate sealing areas, permanently connected to the carrier plate and the laminate, respectively, it is possible to ensure that the sealing has the same strength along its entire circumference, and any penetration of dampness is hereby effectively prevented and at the same time it is rendered absolutely impossible to manipulate the finished licence plate.

Decentralised assembly of the finished plate can be established quite readily since there are no particular requirements to cost-intensive equipment for obtaining the secure connection between the sealing profile and the remaining components. This connection which constitutes a sealing serves to establish a sealing against penetrating dampness and is intended to safeguard against attempts of fraud and can be established by means of commonly known processes such as gluing or welding.

It is required that the separate sealing profile has the exact same position on all licence plates and in order to ensure this, the carrier plate has, in the rim portion not covered by laminate, an annular groove which is filled by a flange element that extends downwards from the sealing profile, said flange element being, at least at the bottom of the groove, unbreakably attached to the carrier plate. During manufacture of the licence plate, the sealing profile is positioned with its downwardly extending flange element in the groove, and thus it is very accurately positioned in relation to the carrier plate.

In order to ensure a well defined welding process, the sealing profile is advantageously - as featured in claim 3 - provided with a second downwardly oriented flange portion within the first flange portion. Hereby it is possible to obtain secure connection to the two downwardly oriented flange portions which enables complete sealing of the laminate at the secure connection of the flange portions to the bottom of the groove and the top of the laminate edge, respectively.

However, particular advantages are obtained by use of ultrasound- or other heat welding to obtain the connections in the sealing areas as stipulated in claim 4, since a controlled and reliable fastening of the sealing profile to the laminate front is hereby obtained; these methods enabling heating of well-defined areas to the temperature required for the given material to obtain secure connection of the portions. The welding of the bottom faces of the one flange portion to the plate and the adhesion of the bottom faces of the one flange portion to the laminate front can be accomplished simultaneously or in two separate process steps. If the sealing profile is made of a material that can be combined by welding to the laminate front face, a secure and sealing connection between the bottom face of the second flange portion and the laminate front is obtained by suitable choice of temperature and pressure during the assembly process.

Claims 5 and 6 relate to advantageous embodiments that are particularly easily established by a licence plate according to the invention. It is easy to dye the sealing profile in a colour that differs from the basic colour of the laminate, as featured in claim 5, to obtain a framing effect of the licence plate. Casting of a control number, as stipulated in claim 6, is quite uncomplicated when the sealing profile is made by injection moulding of plastics material, and hereby further security is obtained against unlawful attempts of manipulating the licence plate.

Referring now to claim 7, the invention also relates to a method of manufacturing a licence plate according to any one of claims 1 through 6, said method being characterised in the following process steps:
a injection moulding of a carrier plate having a front with a peripherally extending, annular groove, and injection moulding of a sealing profile having at least one downwardly configured flange portion that fits into the annular groove;
b application of identification symbols in a laminate with an adhesive back face;
c gluing of the laminate onto the carrier plate within the annular groove thereof;
d arrangement of the sealing profile in such a manner that its first downwardly oriented flange portion extends to the bottom of the groove;
e ultrasound- or hot welding of the first flange portion to the bottom of the groove, and ultrasound-or hot welding of a second flange portion of the sealing profile to the top face of the laminate or to the top face of the transparent protection plate;

The invention will now be described in closer detail with reference to an embodiment which is presented schematically in the figures, wherein
Figure 1 is a cut-through corner section of a licence plate following assembly and sealing;

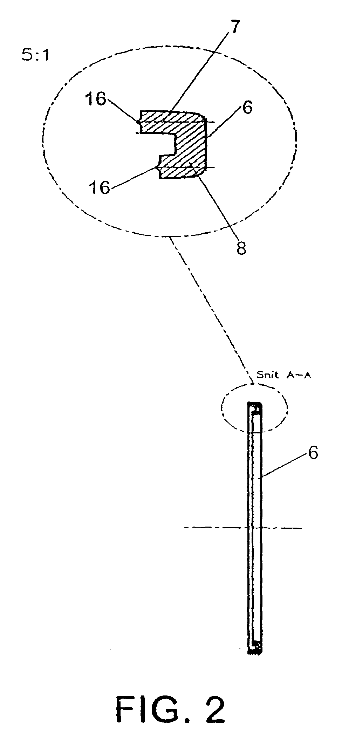

Figure 2 is a sectional view of the sealing profile, a section thereof being shown in an enlarged view;
Figure 3 is a front view of the carrier plate; and
Figure 4 is a sectional view of the carrier plate, a section thereof being shown in an enlarged view.

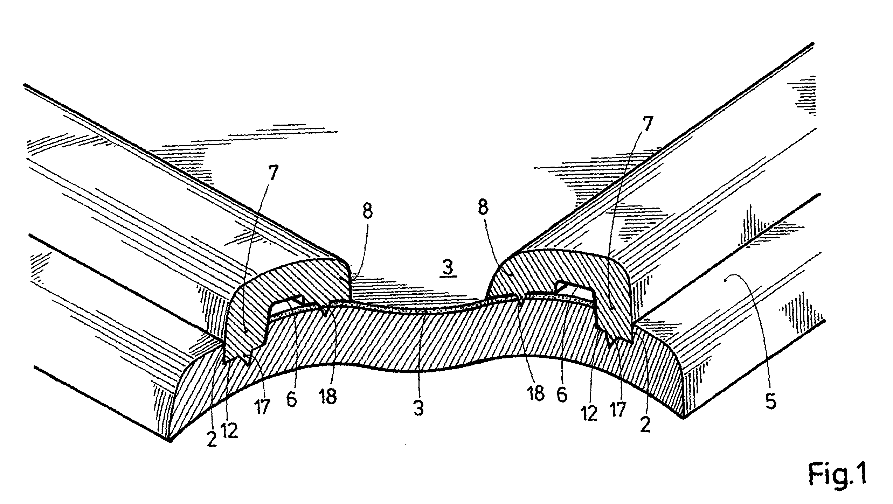

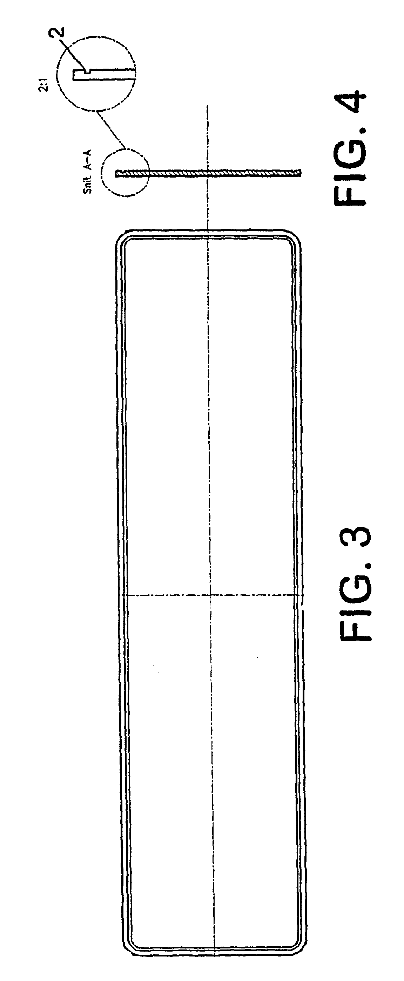

A finished licence plate is shown in Figure 1 wherein the carrier plate 1 has an annular groove 2 that extends along the entire periphery of the plate 1. Also Figure 4 depicts the groove 2 clearly in the enlarged section. In order to save material, the back of the plate can also be provided with a central recess whereby the thickness of the plate is reduced in an area within the groove 2. This is not shown in the drawing. Within the groove 2 the carrier plate 1 is provided with an adhered laminate structure 3 that has, at the bottom, an adhesive layer and, at the top, a weather-, UV-, and wear-resistant and transparent protective layer 4 in the form of a flexible protective layer. The area above and outside the groove 2 is not covered by the laminate 3. Underneath the protective layer 4, there is a layer on which the licence number of the vehicle is printed. The printing can be accomplished in accordance with printing techniques that are commonly used and well-known within the art.

A sealing profile 6 that has two flange portions 7,8 are secured to the carrier plate 1 by the one flange portion 7 being arranged in the groove 2 and secured to the bottom 12 thereof, and the second flange portion 8 is attached to the top layer 4 of the laminate. A welding seam 17 that seals the one flange portion to the groove bottom 12 and a welding seam 18 that connects the second flange portion 8 to the laminate surface 4 extend all the way along the periphery of the carrier plate 1. In this embodiment the welding seams 17,18 are made by ultrasound-or hot welding but, of course, it is possible to form such by use of other welding techniques, or a secure connection can be established by gluing.

The solution shown in Figure 1 using the two downwardly oriented flange portions 7,8 of the sealing profile 6 has proven to yield adequate security that absolute sealing is obtained, and by the positioning of the one flange portion 7 in the groove 2 and securing by welding to the groove bottom 12, a sealing is obtained that makes it virtually impossible to manipulate the laminate structure 3 of the licence plate without destroying the licence plate. However, the sealing profile 6 can have other shapes as long as the profile 6 ensures sealing connection to the laminate 3 along the entire periphery thereof, and sealing connection to the carrier plate 1 along the entire periphery thereof outside the area where the laminate 3 is located. This could also be obtained, eg with an L-shaped sealing profile and a plane carrier plate, or a carrier plate provided with an elevation or recess situated peripherally outside the area which is covered by the laminate.

It is a further advantage of the embodiment shown in Figure 1 that the groove 2 serves as guide in the positioning of the sealing profile 6 during finishing of the licence plate, thereby ensuring uncomplicated assembly that yields a high degree of security against the occurrence of errors.

In the manufacture of the licence plate, the carrier plate 1 and the sealing profile 6 are first injection-moulded in eg ABS, PVC, PA, or other suitable plastics material, and subsequently the laminate structure 3 with licence numbers can be attached to the carrier plate 1 by means of the adhesive layer, following which the sealing profile 6 is arranged in the groove 2, and the formation of the two welding seams 17,18 occurs. Heating by ultrasound- or other heating techniques applied to the two welding seams 17,18 can be accomplished either in a single combined process step or in two separate process steps. Heating ensures that sufficiently elevated temperatures are obtained to perform effective welding between the flange portion 7 and the carrier plate 1 and secure adhesion between the flange portion 8 and the uppermost laminate layer 4. The latter attachment can either be an actual welding - if the two materials can be joined by welding - or - if they cannot be joined by welding, they can consist of a strong and sealing connection resulting from the heating of the bottom face of the flange portion to a temperature above the melting temperature of the sealing profile material and/or the laminate top face material.

To ensure that the ultrasound- energy, in case ultrasound- welding is applied, is concentrated in the correct spots - ie at the bottom face of the flange portions of the sealing profile, they have at the bottom face focusing lines in the form of one or more beads 16 that extend annularly along the flange bottom faces. They appear particularly clearly in the enlarged section of Figure 3.

It is a considerable advantage of the licence plate according to the invention that the assembly of the individual constituents of the licence plate can be performed without difficulty far from the place of manufacture. Thus it becomes possible to manufacture carrier plates and sealing profiles in one central location and let the printing of the film with the licence number and assembly, ie adhering of the film onto the carrier plate and welding of the sealing profile to the carrier plate, be decentralised. It is also enabled that, in case of export of licence plates, to let the base elements - viz carrier plate and sealing profile - be manufactured in one country and then perform the final fitting in the receiving country.

The licence plate shown can be modified in many ways, and thus it can obviously be manufactured with more than one number space; and it can also be made with integral commercial spaces outside the space that actually contains the licence number. Such spaces are common in case of licence plates, but today they will consist of downwardly extending portions of an additional plate mounted below the actual licence plate. Licence plates with integral commercial spaces can thus be offered to car distributors or importers at a small extra cost.

## Claims

1. A number or licence plate for vehicles comprising a sealing profile (6) and a carrier plate (1) of plastics material and a laminate (3) which is adhesively attached to the carrier plate (1), said laminate (3) comprising at least one adhesive layer that faces towards the carrier plate (1) and a layer carrying identification symbols, **characterized in that** the laminate (3) covers the carrier plate (1) to an uncovered rim portion thereof; and that the sealing profile (6) has two separate sealing areas (17,18), viz a first sealing area (17) which is unbreakably secured to the carrier plate (1) at the annular rim portion which is not covered by laminate (3); and a second sealing area (18) which is attached with a sealing connection to the outside of an annular rim area of the laminate (3).

2. A licence plate according to claim 1, **characterized in that**, in the rim portion which is not covered by laminate (3), the carrier plate (1) is provided with an annular groove (2) which is filled by a flange portion (7) that extends downwardly from the sealing profile (6), said flange portion (7) being, at least at the bottom (12) of the groove (2), unbreakably attached to the carrier plate (1) along the sealing area (17).

3. A licence plate according to claims 1 and 2, **characterized in that** the sealing profile (6) is, within the first flange portion (7), provided with a second, downwardly oriented flange portion (8) which is in abutment on the top face of the laminate structure (3) and is attached thereto along a sealing area (18).

4. A licence plate according to claim 1, **characterized in that** the sealings in the sealing areas (17,18) are formed by welding, preferably by ultrasound- or hot welding.

5. A licence plate according to claims 1-4, **characterized in that** the sealing profile (6) has a colour that differs from the basic colour of the laminate structure (3).

6. A licence plate according to claims 1-4, **characterized in that** the sealing profile (6) is made by injection moulding of plastics material, and that a control number is moulded into the profile front.

7. A method of manufacturing a licence plate according to any one of claims 1-6, **characterized in** the following process steps:
a injection moulding of a carrier plate (1) having a front with a peripherally extending, annular groove (2), and injection moulding of a sealing profile (6) having at least one downwardly configured flange portion (7) that fits into the annular groove (2);
b application of identification symbols in a laminate (3) with an adhesive back face;
c gluing of the laminate (3) onto the carrier plate (1) within the annular groove (2) thereof;
d arrangement of the sealing profile (6) in such a manner that its downwardly oriented flange portion (7) extends to the bottom (12) of the groove (2);
e ultrasound- or hot welding of the flange portion (7) to the bottom (12) of the groove (2), and ultrasound- or hot welding of a second flange portion (8) of the sealing profile (6) to the top face of the laminate (3) or to the top face of the transparent protection plate (4).

## Patentansprüche

1. Nummern- oder Kennzeichenschild für Fahrzeuge, umfassend ein Dichtungsprofil (6) und eine Trägerplatte (1) aus Kunststoffmaterial und ein Laminat (3), das an der Trägerplatte (1) haftend angebracht ist, wobei das Laminat (3) mindestens eine Haftschicht, die in Richtung auf die Trägerplatte (1) gewandt ist, und eine Schicht, die Identifizierungssymbole trägt, umfasst, **dadurch gekennzeichnet, dass** das Laminat (3) die Trägerplatte (1) bis zu einem unbedeckten Randteil derselben bedeckt; und dass das Dichtungsprofil (6) zwei separate Dichtungsbereiche (17,18) aufweist, d.h. einen ersten Dichtungsbereich (17), der am ringförmigen Randteil, der vom Laminat (3) nicht bedeckt ist, an der Trägerplatte (1) bruchsicher gesichert ist; und einen zweiten Dichtungsbereich (18), der mit einer Dichtungsverbindung an der Außenseite eines ringförmigen Randbereichs des Laminats (3) angebracht ist.

2. Kennzeichenschild nach Anspruch 1, **dadurch gekennzeichnet, dass** im Randteil, der nicht durch Laminat (3) bedeckt ist, die Trägerplatte (1) mit einer Ringnut (2) versehen ist, die durch einen Flanschteil (7) ausgefüllt ist, der sich vom Dichtungsprofil (6) nach unten erstreckt, wobei der Flanschteil (7) mindestens am Boden (12) der Nut (2) entlang dem Dichtungsbereich (17) bruchsicher an der Trägerplatte (1) angebracht ist.

3. Kennzeichenschild nach Anspruch 1 und 2, **dadurch gekennzeichnet, dass** das Dichtungsprofil (6) innerhalb des ersten Flanschteils (7) mit einem zweiten, nach unten ausgerichteten Flanschteil (8) versehen ist, der sich auf der Oberseite der Laminatstruktur (3) in Anlage befindet und entlang einem Dichtungsbereich (18) daran angebracht ist.

4. Kennzeichenschild nach Anspruch 1, **dadurch gekennzeichnet, dass** die Abdichtungen in den Dichtungsbereichen (17, 18) durch Verschweißen, vorzugsweise durch Ultraschall- oder Heißverschweißen, gebildet sind.

5. Kennzeichenschild nach den Ansprüchen 1-4, **dadurch gekennzeichnet, dass** das Dichtungsprofil (6) eine Farbe aufweist, die sich von der Grundfarbe der Laminatstruktur (3) unterscheidet.

6. Kennzeichenschild nach den Ansprüchen 1-4, **dadurch gekennzeichnet, dass** das Dichtungsprofil (6) durch Spritzgießen von Kunststoffmaterial gebildet ist, und dass eine Kontrollnummer in die Profilvorderseite eingeformt ist.

7. Verfahren zur Herstellung eines Kennzeichenschildes nach einem der Ansprüche 1-6, **gekennzeichnet** in den folgenden Prozessschritten:
a Spritzgießen einer Trägerplatte (1) mit einer Vorderseite mit einer am' Umfang verlaufenden Ringnut (2), und Spritzgießen eines Dichtungsprofils (6) mit mindestens einem nach unten konfigurierten Flanschteil (7), der in die Ringnut (2) passt;
b Aufbringung von Identifizierungssymbolen in einem Laminat (3) mit einer Haftrückseite;
c Aufkleben des Laminats (3) auf die Trägerplatte (1) innerhalb ihrer Ringnut (2);
d Anordnen des Dichtungsprofils (6) auf eine solche Weise, dass sich sein nach unten ausgerichteter Flanschteil (7) bis zum Boden (12) der Nut (2) erstreckt;
e Ultraschall- oder Heißverschweißen des Flanschteils (7) am Boden (12) der Nut (2), und Ultraschall- oder Heißverschweißen eines zweiten Flanschteils (8) des Dichtungsprofils (6) an der Oberseite des Laminats (3) oder an der Oberseite der transparenten Schutzplatte (4).

## Revendications

1. Plaque minéralogique ou d'immatriculation pour véhicule comprenant un profilé de scellement (6) et une plaque de support (1) en matière plastique et une feuille multicouche (3) qui est fixée par adhésif sur la plaque de support (1), ladite feuille multicouche (3) comprenant au moins une couche adhésive qui fait face à la plaque de support (1) et une couche supportant des symboles d'identification, **caractérisée en ce que** la feuille multicouche (3) recouvre la plaque de support (1) jusqu'à une partie de bord non couverte de celle-ci ; et **en ce que** le profilé de scellement (6) comporte deux zones de scellement (17, 18) distinctes, à savoir, une première zone de scellement (17) qui est fixée de manière à ne pouvoir être rompue sur la plaque de support (1) au niveau de la partie de bord annulaire qui n'est pas recouverte par la feuille multicouche (3) ; et une seconde zone de scellement (18) qui est fixée avec une liaison étanche sur l'extérieur d'une zone de bord annulaire de la feuille multicouche (3).

2. Plaque d'immatriculation selon la revendication 1, **caractérisée en ce que**, sur la partie de bord qui n'est pas recouverte par la feuille multicouche (3), la plaque de support (1) comporte une rainure annulaire (2) qui est remplie par une partie en collerette (7) qui s'étend vers le bas par rapport au profilé de scellement (6), ladite partie en collerette (7) étant, au moins sur la partie inférieure (12) de la rainure (2), fixée de manière à ne pouvoir être rompue sur la plaque de support (1) le long de la zone de scellement (17).

3. Plaque d'immatriculation selon les revendications 1 et 2, **caractérisée en ce que** le profilé de scellement (6) comporte, à l'intérieur de la première partie en collerette (7), une seconde partie en collerette (8) orientée vers le bas qui est en butée sur la face supérieure de la structure multicouche (3) et est fixé sur celle-ci le long d'une zone de scellement (18).

4. Plaque d'immatriculation selon la revendication 1, **caractérisée en ce que** les scellements sur les zones de scellement (17, 18) sont formées par soudage, de préférence, par soudage par ultrason ou à chaud.

5. Plaque d'immatriculation selon les revendications 1 à 4, **caractérisée en ce que** le profilé de scellement (6) présente une couleur qui diffère de la couleur de base de la structure multicouche (3).

6. Plaque d'immatriculation selon les revendications 1 à 4, **caractérisée en ce que** le profilé de scellement (6) est réalisé par moulage par injection de matière plastique et **en ce qu'**un numéro de contrôle est moulé dans la partie avant du profilé.

7. Procédé de fabrication d'une plaque d'immatriculation selon l'une quelconque des revendications 1 à 6, **caractérisé par** les étapes de traitement suivantes:
a. moulage par injection d'une plaque de support (1) présentant une partie avant avec une rainure annulaire (2) s'étendant en périphérie, et moulage par injection d'un profilé de scellement (6) présentant au moins une partie en collerette configurée vers le bas (7) qui assemble dans la rainure annulaire (2) ;
b. application de symboles d'identification sur une feuille multicouche (3) avec une face arrière adhésive ;
c. collage de la feuille multicouche (3) sur la plaque de support (1) à l'intérieur de la zone annulaire (2) de cette dernière ;
d. agencement du profilé de scellement (6) d'une telle manière que sa partie en collerette orientée vers le bas (7) s'étend vers la partie inférieure (12) de la rainure (2) ;
e. soudage par ultrason ou à chaud de la partie en collerette (7) sur la partie inférieure (12) de la rainure (2) et soudage par ultrason ou à chaud d'une seconde partie en collerette (8) du profilé de scellement (6) sur la face supérieure de la feuille multicouche (3) ou sur la face supérieure de la plaque de protection transparente (4).
